(19) Europäisches Patentamt

European Patent Office

Office européen des brevets

(11) Veröffentlichungsnummer: **0 166 335**
**B1**

(12) **EUROPÄISCHE PATENTSCHRIFT**

(45) Veröffentlichungstag der Patentschrift: **14.03.90**

(21) Anmeldenummer: **85107421.1**

(22) Anmeldetag: **15.06.85**

(51) Int. Cl.⁵: **H 02 P 8/00**

(54) **Verfahren zum Erkennen von Schrittverlusten bei schrittmotorgetriebenen Stellvorrichtungen.**

(30) Priorität: **26.06.84 DE 3423420**

(43) Veröffentlichungstag der Anmeldung:
**02.01.86 Patentblatt 86/01**

(45) Bekanntmachung des Hinweises auf die
Patenterteilung:
**14.03.90 Patentblatt 90/11**

(84) Benannte Vertragsstaaten:
**AT BE CH DE FR GB IT LI NL SE**

(56) Entgegenhaltungen:
**EP-A-0 025 081**
**DE-A-2 805 363**

**TECHNISCHE RUNDSCHAU, Band 76, Nr. 15, 10.
April 1984, Seiten 16,17,19,21, Bern, CH; H.
BOLLIO et al.: "Der Schrittmotor - das
Antriebselement mit Zukunft"**

(73) Patentinhaber: **HOECHST
AKTIENGESELLSCHAFT
Postfach 80 03 20
D-6230 Frankfurt am Main 80 (DE)**

(72) Erfinder: **Kressirer, Rudolf
Wasgaustrasse 32
D-6230 Frankfurt am Main 80 (DE)**
Erfinder: **Oehler, Siegfried
Sindlinger Strasse 15
D-6238 Hofheim am Taunus (DE)**

Courier Press, Leamington Spa, England.

## Beschreibung

Gegenstand der Erfindung ist ein Verfahren zum Erkennen von Schrittverlusten bei schrittmotorgetriebenen Stellvorrichtungen, bei dem die Längeder Folge der Ansteuerimpulse für den Schrittmotor durch die Sollposition der Stellvorrichtung vorgegeben wird und synchron mit den Ansteuerimpulsen eine Impulsfolge mit einer Segmentscheibe erzeugt wird, die mit dem Rotor des Schrittmotors gekoppelt ist.

Nach der DE—A—28 05 363 ist bekannt, Schrittmotore oder pulsbetriebene Synchronmotore auf Schrittverlust mittels Encoder zu kontrollieren, die je nach Auflösungsvermögen unterschiedlich lange Binärcodes auf einer sich mitdrehenden Scheibe optisch abfragen, die mit den Ansteuerimpulsen verglichen werden. Encoder bestehen aus einer Segmentscheibe mit unterschiedlichen Hell-Dunkelfeldern und einem optischen Sensor. Sie werden bei gleichartiger Ausführung der Hell- und Dunkelfelder auch als inkrementale Weggeber bezeichnet. Als Endabschalter werden mechanische, piezoelektrische oder optische Vorrichtungen eingesetzt. Sie verhindern eine Überlastung oder dienen zum Auffinden eines festen Bezugspunktes (Initialisierung) oder Anschlags.

Nachteilig bei diesem Verfahren, bei dem jeder Ansteuerimpuls durch ein Winkelsensor-Signal quittiert werden muß, ist, daß ein Winkelversatz durch Beschleunigungseffekte nicht berücksichtigt wird. Das heißt, es werden bereits Schrittfehler angezeigt, wo ein Winkelversatz durch elastische Rückstellung noch ausgeglichen wird.

Weiterhin nachteilig sind die vergleichsweise hohen Kosten, insbesondere bei größeren Stückzahlen. Außerdem wird die Information über die absolute Position oft nicht benötigt, da sie in irgendeiner Form in der Ansteuereinheit des zugehörigen Schrittmotors bereits vorliegt (z. B. als Anzahl zurückgelegter Schritte), so daß nur noch die richtige Ausführung der ausgegebenen Schrittimpulse kontrolliert werden muß. Endabschalter können zur Kontrolle von Schrittverlusten während des Motorlaufes nicht benutzt werden, da sie ortsgebunden sind. Sie wären im übrigen auch aufwendig zu justieren.

Es besteht demnach die Aufgabe, ein Verfahren zu schaffen, mit dem die vorbeschriebenen Nachteile vermieden werden.

Die Erfindung, wie sie im Patentanspruch gekennzeichnet ist, löst die Aufgabe dadurch, daß die Impulsfolge mit einer Segmentscheibe erzeugt wird, deren Teilung der bauartlich vorgegebenen Anzahl der anzusteuernden Phasen entspricht, und die Impulsfolge im Rhythmus der Ansteuerimpulse mit dem bauartlich vorgegebenen Muster verglichen wird.

Das erfindungsgemäße Verfahren bietet den Vorteil der Verschleißfreiheit, da keine mechanischen Kontakte benötigt werden. Die erforderliche Vorrichtung ist einfach und unkritisch zu justieren. Das Verfahren ist kostengünstig und bleibt unbeeinflußt bei vermeintlichen Schrittverlusten in der Beschleunigungsphase.

Im folgenden wird die Erfindung anhand der lediglich einen Ausführungsweg darstellenden Zeichnung näher erläutert:

In einen Rechner (1) wird ein der Sollposition der Stellvorrichtung (2) mit Anschlag (6) entsprechender Wert über die Leitung (3) eingegeben, mit dem Ansteuerimpulse oder eine Folge von Ansteuerimpulsen erzeugt werden, die gegebenenfalls z. B. mit einer Treiberstufe (4) verstärkt werden können. Mit der Motorwelle (9) des Schrittmotores (5) ist eine Segmentscheibe (7) starr verbunden, die bei drehendem Motor in einer Lichtschranke (8) eine Impulsfolge erzeugt. Die Impulsfolge wird im Rechner (1) im Rhythmus der Folge der Ansteuerimpulse mit einem Muster verglichen, das durch die Bauart des Motors (5) vorgegeben ist. Der Schrittmotor (5) benötigt für eine kontinuierliche Drehung eine bauartbestimmte Anzahl von Ansteuersignalen (Folge), die sich ständig wiederholt bis zum Erreichen der Sollposition. Wenn ein Betriebszustand eintritt, bei dem sich zwischen Rotorposition und dem elektrisch vorgegebenen Ansteuerzustand eine Differenz von mehr als der halben Länge der Folge ergibt, tritt ein Schrittverlust auf, der Rotor springt in eine neue stabile Position. Die Segmentscheibe (7) kann so ausgestaltet sein, daß die Segmentbreite der Länge der Folge entspricht, daß heißt, der Sensor (8) erzeugt eine der Länge der Folge der Ansteuerungsimpulse entsprechende Impulsfolge. Bei Schrittverlust tritt kurzzeitig eine Pegeländerung am Sensor auf; Übereinstimmung mit dem Muster entfällt, der Motor wird abgeschaltet.

### Beispiel

Bei einem Dilutor, der als Teil eines Analysengerätes für die Flüssigkeitsdosierung bei der quantitativen Proteinbestimmung verwendet wird, ist der Kolben der Dosierspritze, über eine Halterung mit einer Zahnstange (2) verbunden. Diese wird über ein Ritzel von einem 4-Phasen Hybridschrittmotor angetrieben, Durch die Wahl der Drehrichtung wird Flüssigkeit aufgenommen oder abgegeben. Ein am Spritzenausgang angebrachtes Umschaltventil steuert die Richtung des Mediums.

Der Schrittmotor (5) führt auf einem Wellenende (9) eine Segmentshceibe (7) mit je 25 Hell- und Dunkelfeldern mit. Bei einem Schrittwinkel von 1,8° tritt alle vier Schritte ein Pegelwechsel an der Gabellichtschranke (8) auf, welche die Segmente abtastet. Damit werden 2 Funktionen realisiert:

1) Bei der Inbetriebnahme wird der Dilutor initialisiert, d.h. die Zahnstange (2) fährt bis zum mechanischen Anschlag (6) in den Spritzenzylinder. Der am Anschlag auftretende Schrittverlust wird zum Abschalten des Motors (3) benutzt. Die Ausgangsposition (Nullpunkt) für den Kolben ist damit festgelegt.

2) Während der Aufnahme oder Abgabe wird durch die Laufkontrolle über die Segmentscheibe eine eventuelle Fehldosierung durch Schrittverlust erkannt.

Der Schrittmotor wird mit einer sich wiederholenden Folge von vier unterschiedlichen Ansteuerimpulsen in Drehung versetzt. Bei Schrittverlust nimmt der Rotor eine Position ein, welche sich von der vorgegebenen um vier Schritte unterscheidet. Damit diese Abweichung von der Segmentscheibe erkannt wird, ist deren Teilung so ausgeführt, daß nach jeweils vier Schritten der Übergang von einem Hell- zu einem Dunkelfeld oder umgekehrt stattfindet. Nach jedem Ansteuerimpuls wird die Position der Welle über die Segmentscheibe abgefragt und die so entstehende Folge von "0" und "1"-Pegeln mit einem vorgegebenem Muster verglichen. Dieses besteht hier aus einer Folge von je vier "0" und vier "1"-Pegeln, wie sie sich bei richtiger Schrittausführung ergeben. Beim Vergleich der beiden Folgen wird eine bestimmte Anzahl von nicht übereinstimmenden pegeln bei jedem Segmentabschnitt noch zugelassen, ohne daß es zu einer Fehlermeldung führt. Dies ist nötig, da Beschleunigungseffekte zu einem kurzzeitigen Winkelversatz zwischen Rotor und Stator führen können. Der Versatz wird durch die elastischen Rückstellkräfte am Ende der Beschleunigungsphase wieder ausgeglichen.

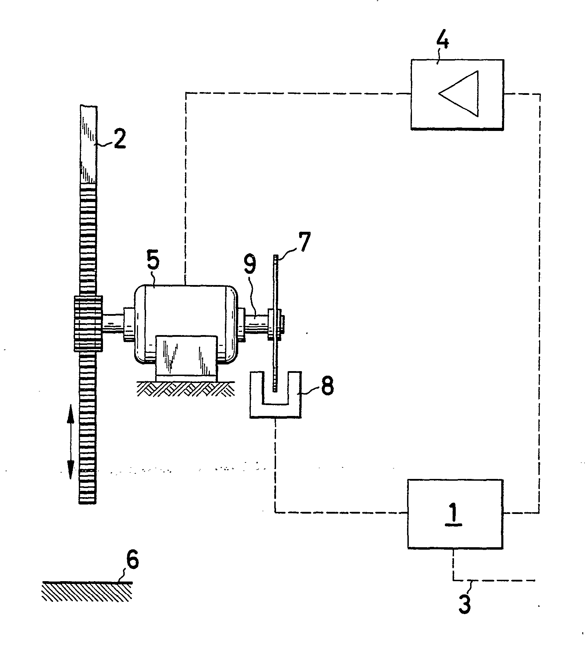

**Patentanspruch**

Verfahren zum Erkennen von Schrittverlusten bei schrittmotorgetriebenen Stellvorrichtungen, bei dem die Länge der Ansteuerimpulse für den Schrittmotor durch die Sollposition der Stellvorrichtung vorgegeben wird und synchron mit den Ansteuerimpulsen eine Impulsfolge mit einer Segmentscheibe, die mit dem Rotor des Schrittmotors gekoppelt ist, erzeugt wird, dadurch gekennzeichnet, daß die Impulsfolge mit einer Segmentscheibe erzeugt wird, deren Teilung der bauartlich vorgegebenen Anzahl der anzusteuernden Phasen entspricht und die Impulsfolge im Rhythmus der Ansteuerimpulse mit dem bauartlich vorgegebenen Muster verglichen wird.

**Revendication**

Procédé pour identifier des pertes de pas dans des dispositifs de régulation commandés par des moteurs pas-à-pas et selon lequel la longueur de la suite des impulsions de commande pour le moteur pas-à-pas est prédéterminée par la position de consigne du dispositif de régulation et une suite d'impulsions est produite, en synchronisme avec les impulsions de commande, au moyen d'un disque segmenté, qui est accouplé au rotor du moteur pas-à-pas, caractérisé en ce que la suite d'impulsions est produite avec un disque segmenté, dont le pas de subdivision correspond au nombre, déterminé par le type de construction, des phases devant être commandées, et que la suite d'impulsions est comparée, au rythme des impulsions de commande, au modèle prédéterminé par le type de construction.

**Claim**

A method for detecting step losses in stepping-motor-driven actuating devices, in which the length of the sequence of drive pulses for the stepping motor is predetermined by the nominal position of the actuating device and a pulse sequence is generated synchronously with the drive pulses by means of a segmented disk which is coupled to the rotor of the stepping motor, wherein the pulse sequence is generated by means of a segmented disk, the spacing of which corresponds to the number of phases to be driven as predetermined by the type of construction, and the pulse sequence is compared at the rate of the drivepulses with the pattern predetermined by the type of construction.